Europäisches Patentamt

European Patent Office

Office européen des brevets

(11) Numéro de publication : **0 684 488 A1**

## DEMANDE DE BREVET EUROPEEN

(21) Numéro de dépôt : **95401106.0**

(22) Date de dépôt : **12.05.95**

(51) Int. Cl.⁶ : **G01S 17/95, G01S 7/481**

(30) Priorité : **27.05.94 FR 9406478**

(43) Date de publication de la demande :
**29.11.95 Bulletin 95/48**

(84) Etats contractants désignés :
**DE FR GB**

(71) Demandeur : **AEROSPATIALE Société Nationale Industrielle**
**37, Boulevard de Montmorency**
**F-75781 Paris Cédex 16 (FR)**

(72) Inventeur : **Krawczyk, Rodolphe, Résidence "Les Romarins"**
**Bât. 17, Boulevard du Val Claret**
**F-06600 Antibes (FR)**

(74) Mandataire : **Rinuy, Santarelli**
**14, avenue de la Grande Armée**
**F-75017 Paris (FR)**

(54) **Instrument spatial d'observation laser, et véhicule spatial le comportant.**

(57) Un instrument spatial d'observation laser pour la caractérisation quantitative par effet DOPPLER de mouvements au sein d'une masse fluide portée par une planète à un axe de référence parallèle localement à sa trajectoire et comporte un générateur laser (12), une unité de mesure de fréquence (13), de premier et second éléments de visée (15, 16) alignés sur l'axe de référence et ayant de premier et second axes de visée (V-V, W-W) d'inclinaisons non nulles par rapport à l'axe de référence et destinés à l'émission et la réception de rayons laser, un télescope unique (14) d'axe confondu avec l'axe de référence pour envoyer des rayons émis par le générateur laser vers les éléments de visée et pour appliquer des rayons laser reçus par les éléments de visée vers l'unité de mesure, et des moyens rotatifs pour faire tourner les éléments de visée par rapport à la platine autour de l'axe de référence. Le premier élément de visée (15), disposé entre ce télescope et le second élément de visée, est adapté à transmettre vers le second élément de visée, selon l'axe de référence, des rayons laser envoyés par le télescope et réciproquement.

Fig.1A

EP 0 684 488 A1

La présente invention concerne un perfectionnement à l'enseignement de base du brevet français 92-00590 déposé le 21 Janvier 1992 par la Demanderesse pour un véhicule spatial d'observation laser, notamment pour la mesure de vitesse de vents, et instrument d'observation adapté à en faire partie.

Ce brevet antérieur avait pour objet de permettre, à partir d'une plate-forme en orbite, des mesures de vitesse en des points uniformément répartis d'une masse fluide à la surface d'une planète (typiquement des mesures de vents à la surface de la Terre) à l'aide de lidars DOPPLER, à détection cohérente ou non, dont les axes de visée effectuent dans des bandes de cette masse fluide un balayage au moins partiellement transversal à la trajectoire instantanée de la plate-forme, sans besoin d'accordabilité variable du laser d'émission ou de l'oscillateur local (cas d'une détection cohérente) ni du (ou des) filtre(s) de réception (cas de la détection directe) et sans pénalité importante ni en masse ni en encombrement par rapport aux solutions connues jusqu'alors.

Ce brevet antérieur a proposé un véhicule spatial pour la caractérisation quantitative par effet DOPPLER de mouvements au sein d'une masse fluide portée par une planète telle que la Terre. Ce véhicule spatial comporte une plate-forme adaptée à suivre une orbite autour de cette planète et ayant un axe de roulis destiné à être parallèle à cette orbite et un axe de lacet destiné à être orienté vers le centre de la planète. Ce véhicule spatial comporte en outre un ensemble d'observation comportant un générateur laser, une unité de mesure de fréquence et deux télescopes munis chacun d'un élément de visée ayant un axe de visée destiné à être orienté vers la planète, adapté à envoyer à partir du générateur laser un rayon émis selon cet axe de visée et à capter selon cet axe un rayon réfléchi puis à l'appliquer à l'unité de mesure de fréquence. Les deux éléments de visée sont reliés à la plate-forme par des moteurs rotatifs d'axes parallèles à l'axe de roulis. Dans ce brevet, il est prévu que les deux axes de visée aient sur cet axe de roulis des projections de sens opposés.

Les moteurs rotatifs sont avantageusement oscillants, de préférence en opposition de phase, avec une période d'oscillation préférentiellement comprise entre 1 et 100 sec.

Dans un premier mode de réalisation, les éléments de visée sont des optiques solidaires des télescopes, et ces télescopes sont reliés à la plate-forme par lesdits moteurs rotatifs.

Dans un deuxième mode de réalisation, les éléments de visée sont des miroirs mobiles par rapport aux télescopes, lesquels sont fixes par rapport à la plate-forme.

Les premier et second axes de visée ont avantageusement, par rapport à l'axe de roulis, une inclinaison comprise entre 20° et 80°, de préférence entre 40° et 50°.

Le fait de faire tourner les axes de visée, non pas autour d'un axe dirigé vers le nadir 'solution "classique") mais autour de l'axe donné par la vitesse du satellite sur son orbite, avait pour gros avantage de rendre constant, donc aisément compensable, l'effet DOPPLER parasite introduit par le déplacement du satellite par rapport à la planète considérée. La raison d'être des télescopes était d'obtenir des mesures suivant des axes de visée différents, de façon à obtenir les composantes de la vitesse du vent (2 composantes si l'on ne s'intéresse qu'au vent horizontal, mais 3 composantes pour le vector "total" du vent).

L'invention a pour objet de réduire encore plus la masse et l'encombrement du système d'observation sans nuire pour autant aux performances et aux avantages que la solution précitée permet d'atteindre.

L'invention propose à cet effet une solution à un seul télescope, en tirant profit de l'existence d'optiques diffractives, c'est-à-dire d'éléments optiques transmettant (ou réfléchissant) des rayons incidents selon une ou deux direction(s) prédéterminée(s), pouvant être à volonté différente(s) de la direction des rayons incidents. Un exemple d'optiques diffractives est donné dans : "Holographic Optical Elements as Conically Scanned Lidar Telescopes" de G.K. SCHWEMMER et Th. D. WILKERSON paru dans Technical Digest on Optical Remote Sensing of the Atmosphère, 1991, (Optical Society of America, Washington, D.C., 1991), Vol. 18, pp 310-312.

Plus précisément, l'invention propose un instrument spatial d'observation laser pour la caractérisation quantitative par effet DOPPLER de mouvements au sein d'une masse fluide portée par une planète, destiné à être déplacé par un véhicule porteur suivant une trajectoire au-dessus de cette masse fluide, ayant un axe de référence destiné à être parallèle localement à cette trajectoire et comportant une platine pour la fixation de cet instrument à ce véhicule porteur, un générateur laser, une unité de mesure de fréquence, de premier et second éléments de visée alignés sur l'axe de référence et ayant de premier et second axes de visée d'inclinaisons non nulles par rapport à l'axe de référence et destinés à être orientés vers la planète pour l'émission et la réception de rayons laser et ayant sur l'axe de référence des projections de sens de préférence opposés, un dispositif à télescope d'axe confondu avec l'axe de référence pour envoyer des rayons émis par le générateur laser vers les éléments de visée et pour appliquer des rayons laser reçus par les éléments de visée vers l'unité de mesure, et des moyens rotatifs pour faire tourner les éléments de visée par rapport à la platine autour de l'axe de référence, cet instrument étant caractérisé en ce que le dispositif à télescope comporte un télescope unique, le premier élément de visée étant disposé entre ce télescope et le second élément de visée et étant adapté à transmettre vers le second élément de visée, selon l'axe de référence, au moins une partie des rayons laser envoyés par le télescope à une fréquence prédéterminée, et à transmettre vers ce télescope,

2

selon l'axe de référence, des rayons laser reçus par le second élément de visée.

Selon des enseignements préférés, éventuellement combinés :

- le premier élément de visée est un élément optique diffractif de transmission, coaxial au télescope et de diamètre égal, au moins approximativement, au diamètre optique du télescope et ayant deux axes de transmission respectivement confondus avec l'axe de référence et le premier axe de visée, et le second élément de visée est un élément optique de réflexion,
- le second élément de visée est un miroir incliné par rapport à l'axe de référence,
- le second élément de visée est un élément optique diffractif de réflexion, coaxial au télescope, de diamètre égal, au moins approximativement, au diamètre optique du télescope, et ayant un axe de réflexion confondu avec ce second axe de visée,
- le générateur laser a une fréquence d'émission unique pour laquelle l'élément optique diffractif de transmission transmet un rayon laser venant de ce générateur laser pour partie suivant l'axe de référence, pour partie suivant le premier axe de visée, les premier et second axes de visée ayant par rapport à l'axe de référence des inclinaisons différentes,
- le générateur laser a une première fréquence d'émission pour laquelle l'élément optique diffractif de transmission transmet la totalité d'un rayon laser venant du générateur laser suivant l'axe de référence, et une seconde fréquence d'émission pour laquelle l'élément optique diffractif de transmission transmet la totalité d'un rayon laser venant du générateur laser suivant le premier axe de visée,
- les premier et second axes de visée ont, par rapport à l'axe de référence, des inclinaisons égales mais de signes opposés,
- les premier et second axes de visée ont, par rapport à l'axe de référence, des inclinaisons comprises entre 20° et 80°,
- ces inclinaisons sont comprises entre 40° et 50°.

L'invention concerne également une version simplifiée d'instrument d'observation.

En fait, il a été expliqué que la mesure de vitesses de vents à l'aide d'instruments lidar embarqués à bord de satellite impose souvent un mécanisme de balayage de manière à couvrir une zone suffisante pour déterminer ce que les scientifiques appellent un "champ de vents". Chaque mesure élémentaire (correspondant à un tir laser) est par principe effectuée suivant une ligne de visée qui est la tige joignant l'instrument lidar d'émission à la zone cible (appelée cellule) interceptant le tir laser et renvoyant un signal de retour à l'instrument. L'obtention de plusieurs lignes de visée pour obtenir la couverture voulue est assurée soit par balayage par un dispositif approprié du faisceau émis par l'instrument ou par l'émission de tirs selon différentes lignes de visée prédéterminées.

Jusqu'à présent, les scientifiques ont souhaité disposer, pour chaque cellule, de mesures effectuées suivant plusieurs ligne de visée, en sorte de rendre possible la détermination de la composante horizontale des vitesses de vents dans cette cellule. Toutefois, l'apparition récente de modèles sophistiqués d'acquisition/simulation des vents semble rendre possible l'obtention d'un niveau suffisant de connaissance des champs de vents à partir de mesures disponibles suivant une seule ligne de visée par cellule.

L'invention propose ainsi un instrument spatial d'observation laser pour la caractérisation quantitative par effet DOPPLER de mouvements au sein d'une masse fluide portée par une planète, destiné à être déplacé par un véhicule porteur suivant une trajectoire au-dessus de cette masse fluide, ayant un axe de référence destiné à être parallèle localement à cette trajectoire et comportant une platine pour la fixation de cet instrument à ce véhicule porteur, un générateur laser, une unité de mesure de fréquence, des moyens de visée alignés sur l'axe de référence et ayant au moins de premier et second axes de visée d'inclinaisons non nulles par rapport à l'axe de référence et destinés à être orientés vers la planète pour l'émission et la réception de rayons laser, un dispositif à télescope d'axe confondu avec l'axe de référence pour envoyer des rayons émis par le générateur laser vers les moyens de visée et pour appliquer des rayons laser reçus par ceux-ci vers l'unité de mesure, cet instrument étant caractérisé en ce que le dispositif à télescope comporte un télescope unique, les moyens de visée comportant un élément optique diffractif adapté à séparer les rayons laser envoyés par le télescope à une fréquence prédéterminée, en au moins deux faisceaux ayant des directions différentes et à envoyer vers ce télescope, selon l'axe de référence, des rayons laser reçus suivant ces deux directions différentes.

Il faut noter qu'une telle définition générale de l'invention englobe la définition plus précise donnée plus haut.

De manière préférée, l'élément diffractif optique est du type réfléchissant avec plusieurs directions différentes de réflexion par rapport à la ligne de référence selon laquelle le télescope émet et reçoit des faisceaux laser.

L'invention concerne également un véhicule spatial muni d'un tel instrument d'observation.

Des objets, caractéristiques et avantages de l'invention ressortent de la description qui suit, donnée à titre d'exemple non limitatif, en regard des dessins annexés sur lesquels :

- la figure 1A est une vue schématique en perspective d'un instrument d'observation conforme à l'invention, représentant des rayons émis selon deux axes de visée,
- la figure 1B est une vue schématique similaire, représentant des rayons captés selon les deux axes de visée,
- la figure 2 est une vue schématique de côté d'un autre instrument d'observation conforme à l'invention,
- la figure 3 est une vue schématique de côté d'encore un autre instrument d'observation conforme à l'invention,
- la figure 4 est une vue schématique d'un véhicule spatial muni de l'instrument de la figure 1, sur une orbite d'altitude H, survolant une couche atmosphérique de hauteur h, et
- la figure 5 est une vue latérale schématique d'un instrument d'observation simplifié.

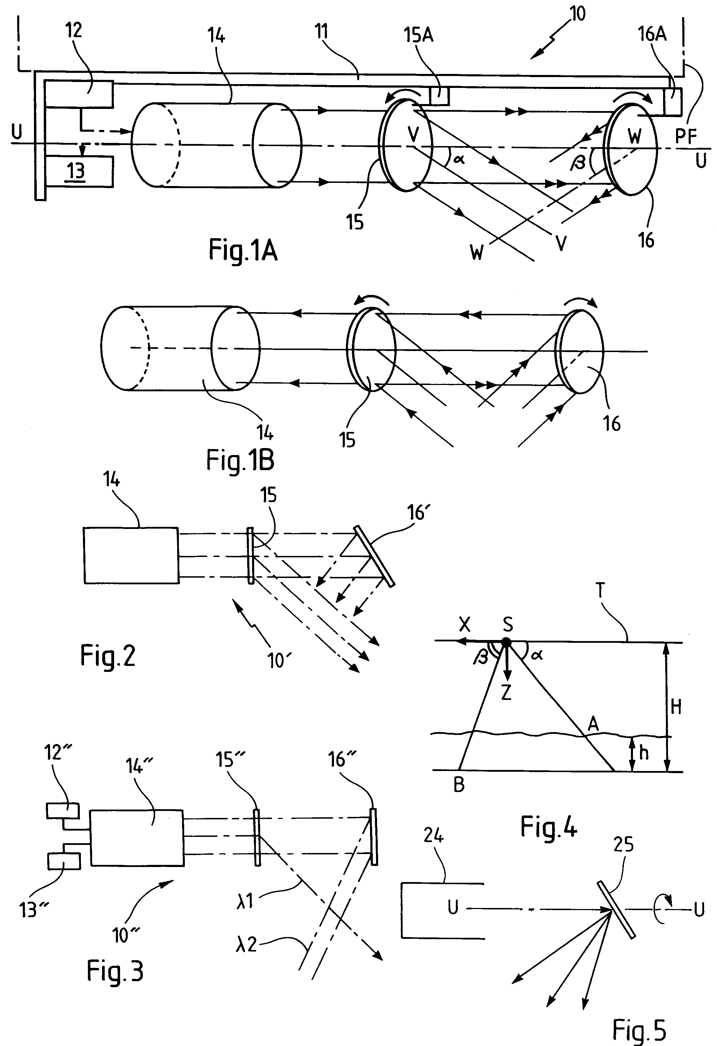

Les figures 1A et 1B représentent schématiquement un instrument spatial d'observation laser, repéré dans son ensemble sous la référence 10, destiné à la caractérisation quantitative par effet DOPPLER de mouvements au sein d'une masse fluide portée par une planète.

Cet instrument 10 est destiné à être déplacé par un véhicule porteur suivant une trajectoire T (voir la figure 4) au-dessus de cette masse fluide. Ce véhicule porteur est en pratique une plate-forme PF représentée en traits mixtes à la figure 1A, et l'ensemble constitue un véhicule spatial ou satellite 5 représenté par un simple point à la figure 4.

La trajectoire T est représentée par une ligne droite à la figure 4 mais ce n'est qu'une mesure de simplification puisque cette trajectoire est en principe une orbite. On désigne son altitude par H et la hauteur ou l'épaisseur moyenne de la masse fluide à caractériser par $\underline{h}$.

La plate-forme a un axe de roulis X destiné à être parallèle localement à la trajectoire et un axe de lacet Z destiné à être orienté vers le centre de la planète.

Cet instrument spatial d'observation laser 10 a un axe de référence U-U destiné, lorsque cet instrument est fixé sur la plate-forme, à être parallèle à l'axe de roulis.

Cet instrument comporte une platine schématisée en 11 pour sa fixation à la plate-forme par tout moyen connu approprié non représenté. A cette platine 11 sont fixés :

- un générateur laser schématisé en 12, destiné à émettre des rayons laser,
- une unité de mesure de fréquence schématisé en 13 et destinée à recevoir des rayons laser captés par l'instrument 10,
- un télescope unique 14 d'axe confondu avec l'axe de référence,
- de premier et second éléments de visée 15 et 16, alignés sur, et coaxiaux à, l'axe de référence U-U et ayant de premier et second axes de visée V-V et W-W destinés à être orientés vers la planète pour l'émission et la réception de rayon laser,
- de premier et second moteurs rotatifs 15A et 16A pour faire tourner ces éléments de visée autour de l'axe de référence, de préférence en pivotement, et avantageusement en opposition de phase.

Le télescope 14 est adapté à envoyer des rayons, émis par le générateur laser 12, vers les éléments de visée, et à appliquer des rayons laser reçus par les éléments de visée à l'unité de mesure 13.

Les axes de visée V-V et W-W ont de préférence sur l'axe de référence des projections de sens opposés ; ils ont vis à vis de celui-ci des inclinaisons typiquement comprises entre 20° et 70°, voire 80°. En variante non représentée ces axes de visée ont sur l'axe de visée des projections de mêmes sens (avec des inclinaisons différentes).

On désigne ici par un premier élément de visée celui qui est disposé entre le télescope et l'autre élément de visée.

Ce premier élément de visée 15 est adapté à transmettre suivant l'axe de référence une partie des rayons qu'il reçoit du générateur laser au travers du télescope. Deux cas sont possibles :

a - soit le générateur laser émet des rayons à une fréquence, laser unique $\lambda o$ auquel cas le premier élément de visée 15 partage ces rayons en deux sous-rayons d'énergies avantageusement sensiblement égales dont l'un se propage vers le second élément de visée 16 suivant l'axe de référence, et l'autre se propage suivant le premier axe de visée,

b - soit le générateur laser émet des rayons selon deux fréquences distinctes $\lambda 1$ et $\lambda 2$, auquel cas le premier élément de visée peut partager des rayons comme précédemment, ou en variante préférée (voir figure 3) faire se propager ces rayons en fonction de leur fréquence, soit suivant l'axe de référence, soit suivant le premier axe de visée V-V.

Dans une version très simplifiée, correspondant à un partage des rayons, on peut choisir une lame semi-transparente ; cette solution présente toutefois, notamment, l'inconvénient d'appliquer également un partage en deux des rayons captés par le second élément de visée et renvoyés vers le télescope, de sorte que le télescope ne reçoit qu'une partie de ces rayons captés. Une telle solution permet par contre que le premier axe de visée soit dans le sens de X.

C'est pourquoi, de manière très préférée, le premier élément de saisie est un élément optique diffractif de transmission coaxial au télescope et de diamètre approximativement égal au diamètre optique du télescope (voire supérieur à ce diamètre, mais il en découle un supplément de masse). Cet élément 15 a deux axes de transmission respectivement confondus avec l'axe de référence et le premier axe de visée. Cette solution a pour avantage qu'en réception (voir la figure 1B) les rayons reçus aussi bien selon le premier axe de visée que selon le second axe de visée et renvoyés par le second élément de visée sont transmis en totalité vers le télescope ; le fait que les axes de visée puissent se croiser ne pose par contre pas de problème.

Le second élément de visée 16 est, aux figures 1A et 1B, également un élément optique diffractif, admettant toutefois, à la différence de l'élément 15, une direction de réflexion (confondue avec le second élément de visée).

La figure 2 représente un autre instrument, repéré 10', dans lequel le second élément de visée, qui est repéré 16' pour le distinguer des figures 1A et 1B, est un miroir incliné par rapport à l'axe de référence.

L'avantage de l'élément 16 par rapport au miroir 16' est une moindre section puisqu'il est, comme l'élément 15, perpendiculaire à U-U) donc une moindre masse, et corrélativement un équilibrage dynamique plus simple puisque les deux éléments optiques diffractifs peuvent aussi avoir la même inertie, la plus faible possible.

Comme on l'a vu précédemment, la figure 3 représente un autre instrument 10", dont le générateur 12" a deux fréquences de travail, l'élément optique diffractif 15" étant réalisé en sorte de transmettre, selon la fréquence de l'impulsion considérée, soit suivant U-U, soit suivant V-V. Cela a les avantages suivants :

- à chaque tir laser, on récupère pratiquement toute l'énergie émise sur l'un des axes de visée (contre environ la moitié seulement dans les exemples des figures 1A, 1B et 2 avec une seule longueur d'onde),
- si les deux longueurs d'onde sont bien choisies, on peut en même temps utiliser l'instrument (il constitue un lidar) en DIAL (acronyme approximatif de DIfférential Absorption Lidar), permettant la mesure de concentration en certains constituants de la masse fluide, en fonction de la longueur d'onde utilisée,
- en outre les inclinaisons respectives $\alpha$ et $\beta$ des premier et second axes de visée peuvent être égales, ce qui facilite la détection et l'analyse des signaux en retour.

Il faut cependant noter que l'élément 15" doit être calibré pour ne laisser passer aucun rayon "parasite" suivant V-V, soit suivant U-U selon la fréquence du tir laser considéré. Cet élément 15" doit donc être parfaitement ajusté à ces deux fréquences et toute dérive, même légère, de ces fréquences peut dégrader sévèrement les performances de l'instrument.

Cette contrainte se traduit en principe par la nécessité d'utiliser une optique diffractive épaisse, donc lourde, et plus complexe à réaliser.

Il est intéressant de veiller à ce que les deux longueurs d'onde soient suffisamment proches pour ne pas nécessiter d'accorder l'oscillateur local de l'instrument (non représenté) suivant l'une ou l'autre des longueurs d'onde ; de toute façon, une mission DIAL (voir ci-dessus) requiert en pratique que ces longueurs d'onde soient proches.

Par contre, lorsque le premier élément de visée partage les rayons émis, il est recommandé que les inclinaisons $\alpha$ et $\beta$ soient différentes de manière que les rayons captés suivant l'un ou l'autre des axes de visée soient reçus en des moments différents pour en faciliter la détection, la discrimination et l'analyse.

L'homme de métier sait réaliser des éléments optiques diffractifs appropriés à ses besoins, en transmission et en réflexion, et agissant comme filtres le cas échéant (cas de la figure 3). Cela ne sera pas détaillé ici.

L'inclinaison $\alpha$ du premier élément de visée est typiquement comprise entre 20° et 70°, de préférence entre 40° et 50°. L'inclinaison $\beta$ du second élément de visée est typiquement comprise entre 30° et 60°, de préférence entre 40° et 50°.

La différence entre les inclinaisons $\alpha$ et $\beta$ fait que l'effet DOPPLER dû à la vitesse du satellite n'est pas le même pour les deux axes de visée. Dans le cas où cet effet DOPPLER doit être corrigé avant la détection (c'est-à-dire que l'unité de détection ou de mesure n'a pas une bande passante suffisante, ce qui peut se produire lorsque la longueur d'onde d'émission est inférieure à 5 $\mu$m), cela peut imposer d'avoir un oscillateur local accordable sur deux longueurs d'onde (pour une détection cohérente). Toutefois, il est apparu possible de trouver pour $\alpha$ et $\beta$ des valeurs suffisamment différentes pour que les signaux de retour suivant $\alpha$ et $\beta$ soient reçus à des moments différents, maus suffisamment proches pour que l'écart d'effet DOPPLER soit acceptable au niveau du détecteur.

Une autre contrainte est que l'instrument comporte un dispositif (non représenté) de compensation de l'angle de traîne qui, à la différence des solutions connues, doit compenser l'angle de traîne du rayonnement émis/reçu suivant $\alpha$, puis celui du rayonnement émis/reçu suivant $\beta$. Cette complication s'atténue toutefois si l'on admet de recevoir les signaux en retour suivant l'un des axes de visée, entièrement avant ou après le signal de retour suivant l'autre axe de visée.

On peut montrer que la première contrainte est satisfaite si on a (en prenant $\alpha < \beta$) :

$$\frac{4\ Vmax.\cos\beta}{\lambda} + \frac{2\ Vs}{\lambda}\ |\cos\alpha\ -\ \cos\beta|\ < B$$

où :

Vmax     est la vitesse maximale du vent

Vs     est la vitesse du satellite

B     est la bande passante du détecteur utilisé.

La deuxième contrainte est satisfaite en écrivant que les trajets SA et SB respectent l'expression suivante (en prenant $\alpha < \beta$) :

$$2.\frac{H\ -\ h}{\sin\alpha} > 2.\frac{H}{\sin\beta}$$

A titre d'exemple :

$\alpha$     = 45°

$\beta$     = 50°

$\lambda$     = 2 $\mu$m

B     = 2 GHz

H     = 400 km

h     = 7000 m/s

Vmax     = 100 m/s

On peut vérifier que les conditions précitées sont satisfaites :

* le premier terme de la première expression donne 580 MHz qui est bien inférieur à 2 GHz,

* quant à la deuxième expression, elle devient :

537 km > 522 km

ce qui est correct.

Il va de soi que la description qui précède n'a été proposée qu'à titre d'exemple non limitatif et que de nombreuses variantes peuvent être proposées par l'homme de l'art sans sortir du cadre de l'invention.

On peut ainsi noter que l'enseignement précité est fondé sur l'émission simultanée, par l'instrument pris dans son ensemble, de deuxs faisceaux laser grâce à deux éléments optiques rotatifs incluant un élément diffractif à transmission et un élément réfléchissant (miroir ou élément diffractif réfléchissant) : le premier élément sépare le faisceau laser en des faisceaux distincts, dont l'un est directement dévié suivant l'une des lignes de visée et l'autre est orienté vers le deuxième élément qui le dévie selon la seconde ligne de visée. La couverture de la zone cible est assurée par un balayage assuré par la rotation des éléments optiques ; la rotation peut bien sûr être continue, ou non : le mouvement non continu rend possible d'accumuler plusieurs tirs en sorte d'améliorer le rapport signal sur bruit du signal en retour.

Il est clair que l'absence de rotation permet néanmoins de collecter des données suivant deux lignes de visée interceptant deux bandes longitudinales de la masse cible. Comme cela a déjà été exposé, il peut suffire pour certains modèles d'observation d'avoir des données pour une cellule donnée selon une unique ligne de visée.

L'invention se généralise aisément à des mesures selon une seule ligne de visée, pour un nombre relativement petit de cellules (typiquement 2 à 6, mais ce nombre n'est pas limitatif), en ne conservant qu'un seul élément diffractif ; dans ce cas il est intéressant d'utiliser un élément diffractif 25 purement réfléchissant en sorte d'éviter les pertes engendrées par un élément à transmission. Comme cela est représenté à la figure 5, le principe est exactement le même que celui précédemment décrit, avec la seule différence qu'au lieu de séparer le faisceau laser aligné avec le télescope 24 en deux faisceaux distincts, ce faisceau est en fait séparé en un certain nombre de faisceaux (ce nombre étant inférieur ou égal au nombre de cellules) et dévié suivant toutes les lignes de visée correspondantes ; cette séparation rend possible d'abandonner la rotation de l'élément optique 25 si le nombre de faisceaux distincts est égal au nombre de cellules (typiquement 2 à 6 mais ce nombre n'est pas limitatif).

Pour éviter l'arrivée simultanée de signaux en retour depuis différentes cellules situées à la même distance de l'instrument (cela poserait des problèmes de traitement de signal), il est recommandé de séparer les faisceaux laser suivant des angles qui permettent aux signaux en retour de revenir à l'instrument à des instants différents.

Il faut se rappeler que le rayon en retour suit le même chemin (en sens inverse) que le faisceau émis entre le télescope d'émission/réception et la zone cible.

## Revendications

1. Instrument spatial d'observation laser pour la caractérisation quantitative par effet DOPPLER de mouvements au sein d'une masse fluide portée par une planète, destiné à être déplacé par un véhicule porteur (PF) suivant une trajectoire au-dessus de cette masse fluide, ayant un axe de référence (U-U) destiné à être parallèle localement à cette trajectoire et comportant une platine (11) pour la fixation de cet instrument à ce véhicule porteur, un générateur laser (12, 12"), une unité de mesure de fréquence (13, 13"), de premier et second éléments de visée (15, 15", 16, 16', 16") alignés sur l'axe de référence et ayant de premier et second axes de visée (V-V, W-W) d'inclinaisons non nulles par rapport à l'axe de référence et destinés à être orientés vers la planète pour l'émission et la réception de rayons laser et ayant sur l'axe de référence des projections de sens de préférence opposés, un dispositif à télescope (14, 14") d'axe confondu avec l'axe de référence pour envoyer des rayons émis par le générateur laser vers les éléments de visée et pour appliquer des rayons laser reçus par les éléments de visée vers l'unité de mesure, et des moyens rotatifs (15A, 16A) pour faire tourner les éléments de visée par rapport à la platine autour de l'axe de référence, cet instrument étant caractérisé en ce que le dispositif à télescope comporte un télescope unique (14, 14"), le premier élément de visée (15, 15") étant disposé entre ce télescope et le second élément de visée (16, 16', 16") et étant adapté à transmettre vers le second élément de visée, selon l'axe de référence, au moins une partie des rayons laser envoyés par le télescope à une fréquence prédéterminée, et à transmettre vers ce télescope, selon l'axe de référence, des rayons laser reçus par le second élément de visée.

2. Instrument spatial selon la revendication 1, caractérisé en ce que le premier élément de visée (15, 15") est un élément optique diffractif de transmission, coaxial au télescope et de diamètre égal, au moins approximativement, au diamètre optique du télescope et ayant deux axes de transmission respectivement confondus avec l'axe de référence et le premier axe de visée, et le second élément de visée (16, 16', 16") est un élément optique de réflexion.

3. Instrument spatial selon la revendication 2, caractérisé en ce que le second élément de visée est un miroir (16') incliné par rapport à l'axe de référence.

4. Instrument spatial selon la revendication 2, caractérisé en ce que le second élément de visée est un élément optique diffractif de réflexion (16, 16"), coaxial au télescope, de diamètre égal, au moins approximativement, au diamètre optique du télescope, et ayant un axe de réflexion confondu avec ce second axe de visée.

5. Instrument spatial selon l'une quelconque des revendications 2 à 4, caractérisé en ce que le générateur laser (12) a une fréquence d'émission unique pour laquelle l'élément optique diffractif de transmission transmet un rayon laser venant de ce générateur laser pour partie suivant l'axe de référence, pour partie suivant le premier axe de visée, les premier et second axes de visée ayant par rapport à l'axe de référence des inclinaisons différentes.

6. Instrument spatial selon l'une quelconque des revendications 2 à 4, caractérisé en ce que le générateur laser (12") a une première fréquence d'émission pour laquelle l'élément optique diffractif de transmission transmet la totalité d'un rayon laser venant du générateur laser suivant l'axe de référence, et une seconde fréquence d'émission pour laquelle l'élément optique diffractif de transmission transmet la totalité d'un rayon laser venant du générateur laser suivant le premier axe de visée.

7. Instrument spatial selon la revendication 6, caractérisé en ce que les premier et second axes de visée ont, par rapport à l'axe de référence, des inclinaisons égales.

8. Instrument spatial selon l'une quelconque des revendications 1 à 7, caractérisé en ce que les premier et second axes de visée ont, par rapport à l'axe de référence, des inclinaisons comprises entre 20° et 80°.

9. Instrument spatial selon la revendication 8, caractérisé en ce que ces inclinaisons sont comprises entre 40° et 50°.

10. Véhicule spatial d'observation pour la caractérisation quantitative par effet DOPPLER de mouvements au sein d'une masse fluide portée par une planète, comportant une plate-forme (PF) adaptée à suivre une orbite autour de cette planète, ayant un axe de roulis destiné à être parallèle à cette orbite et un axe de lacet destiné à être orienté vers le centre de la planète, ce véhicule spatial comportant en outre un instrument spatial d'observation laser (10) conforme à l'une quelconque des revendications 1 à 9, fixé à la plate-forme en sorte que l'axe de référence soit parallèle à l'axe de roulis.

11. Instrument spatial d'observation laser pour la caractérisation quantitative par effet DOPPLER de mouvements au sein d'une masse fluide portée par une planète, destiné à être déplacé par un véhicule porteur (PF) suivant une trajectoire au-dessus de cette masse fluide, ayant un axe de référence (U-U) destiné à être parallèle localement à cette trajectoire et comportant une platine (11) pour la fixation de cet instrument à ce véhicule porteur, un générateur laser (12, 12"), une unité de mesure de fréquence (13, 13"), des moyens de visée (15, 15", 16, 16', 16", 25) alignés sur l'axe de référence et ayant au moins de premier et second axes de visée (V-V, W-W) d'inclinaisons non nulles par rapport à l'axe de référence et destinés à être orientés vers la planète pour l'émission et la réception de rayons laser, un dispositif à télescope (14, 14") d'axe confondu avec l'axe de référence pour envoyer des rayons émis par le générateur laser vers les moyens de visée et pour appliquer des rayons laser reçus par ceux-ci vers l'unité de mesure, cet instrument étant caractérisé en ce que le dispositif à télescope comporte un télescope unique (14, 14"), les moyens de visée comportant un élément optique diffractif (15, 15", 16, 16', 16", 25) adapté à séparer les rayons laser envoyés par le télescope à une fréquence prédéterminée, en au moins deux faisceaux ayant des directions différentes et à envoyer vers ce télescope, selon l'axe de référence, des rayons laser reçus suivant ces deux directions différentes.

12. Instrument spatial selon la revendication 11, caractérisé en ce que les moyens de visée comportent un élément optique diffractif réfléchissant adapté à réfléchir et séparer le faisceau laser en des faisceaux laser réfléchis différents.

Fig.1A

Fig.1B

Fig.2

Fig.3

Fig.4

Fig.5

Office européen
des brevets

# RAPPORT DE RECHERCHE EUROPEENNE

Numero de la demande

EP 95 40 1106

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-5 255 065 (SCHWEMMER) 19 Octobre 1993<br>----- | | G01S17/95<br>G01S7/481 |

DOMAINES TECHNIQUES RECHERCHES (Int.Cl.6)

G01S
G02B

Le présent rapport a été établi pour toutes les revendications

| Lieu de la recherche | Date d'achèvement de la recherche | Examinateur |
|---|---|---|
| LA HAYE | 8 Août 1995 | Zaccà, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP O FORM 1503 03.82 (P04C02)